# EUROPÄISCHE PATENTSCHRIFT

(11) **EP 0 532 102 B1**
(45) Veröffentlichungstag und Bekanntmachung des Hinweises auf die Patenterteilung: **22.04.1998**
(21) Anmeldenummer: 92202706.5
(22) Anmeldetag: 08.09.1992
(51) Int. Cl.: H04L 12/22, H04Q 11/04, H04L 12/50

(54) **System zur Kontrolle des Zugriffs auf die Daten eines Datengerätes**
System for controlling data access to a data apparatus
Système pour contrôler l'accès aux données d'un appareil de données

(30) Priorität: 11.09.1991 DE 4130123
(43) Veröffentlichungstag der Anmeldung: 17.03.1993
(73) Patentinhaber: LUCENT TECHNOLOGIES INC., Murray Hill, New Jersey 07974-0636 (US)
(72) Erfinder: Riegel, Maximilian, c/o Philips Patentverw. GmbH, W-2000 Hamburg 1 (DE); Ramsteck, Charlotte, c/o Philips Patentverw. GmbH, W-2000 Hamburg 1 (DE); Haber, Hans-Joachim, c/o Philips Patentverw. GmbH, W-2000 Hamburg 1 (DE)
(74) Vertreter: Blumbach, Kramer & Partner GbR

(56) Entgegenhaltungen:
- EP-A- 0 221 589
- DE-A- 2 936 910
- FR-A- 2 605 119
- GB-A- 2 168 831
- ELECTRONICS. DE 1984 A 1985 : ELECTRONICS WEEK, Bd.57, Nr.5, März 1984, NEW YORK US Seiten 131 - 135 J.SMITH 'Call-back schemes ward off unwanted access by telephone'
- PROTECTOR, Bd.18, Nr.6, Dezember 1990, ZURICH CH Seiten 21 - 26, XP244618 H.FUHRMANN 'Dienstintegrierende Konzepte mit zukünftigen Techniken'

## Beschreibung

Die Erfindung betrifft ein System zur Kontrolle des Zugriffs auf die Daten eines Datengerätes, das an ein öffentliches Netz angeschlossen ist und das Daten über dieses Netz mit einem zweiten Teilnehmer austauschen kann.

Derartige Systeme sind bekannt. Als Beispiel sei hier eine Datenbank genannt, deren Daten über ein öffentliches Netz zum Teilnehmer übertragen werden können. Voraussetzung für den Zugriff auf die Daten der Datenbank ist, daß der Teilnehmer die öffentliche Rufnummer der Datenbank und seine Kunden - bzw. Geheimnummer gewählt hat. Ein auf Rückruf basierendes Kontrollsystem bei Validierung eines Passwords oder eines Codes ist z.B. aus der FR-A 2 605 119 und aus dem Aufsatz "Call-back schemes ward off unwanted access by telephone", von J. Smith, in Electronics International, Band 57, Nr. 5, März 1984, Seiten 131 bis 135, bekannt.

Wegen der Geheimnummer hat - in der Regel - nur ein berechtigter Teilnehmer Zugang zu den Daten der Datenbank. Damit ist eine gewisse Kontrolle gegeben. Jedoch ist diese Kontrolle für sicherheitsempfindliche Daten nicht ausreichend, weil durch systematisches, rechnergestütztes Durch-probieren von Geheimnummern schon so manche Datenbank und so mancher Computer "geknackt" worden ist, wie allgemein bekannt ist.

Der Erfindung liegt die Aufgabe zu Grunde, ein System der Eingangs genannten Art anzugeben, bei dem der Zugriff auf sicherheitsempfindliche Daten eines Datengerätes nicht durch Geheimnummern, die über ein öffentliches Netz über tragen werden können, kontrolliert wird.

Diese Aufgabe wird durch folgende Merkmale gelöst: Dem Datengerät ist eine Anpassungsschaltung zugeordnet, die über ein gesichertes Netz anwählbar ist,

die Anpassungsschaltung ist derart ausgelegt, daß sie beiihrer Anwahl über das gesicherte Netz das Datengerät veranlaßt, den zweiten Teilnehmer über das öffentliche Netz anzuwählen, dessen Rufnummer in einem dem Datengerät zugeordneten Speicher gespeichert ist.
Durch diese Maßnahmen sind sowohl die vom Datengerät abgegebenen Daten als auch die zugeführten Daten vor unbefugtem Zugriff geschützt.

Vorteilhafte Ausgestaltungen der Erfindung sind in den Unteransprüchen angegeben.

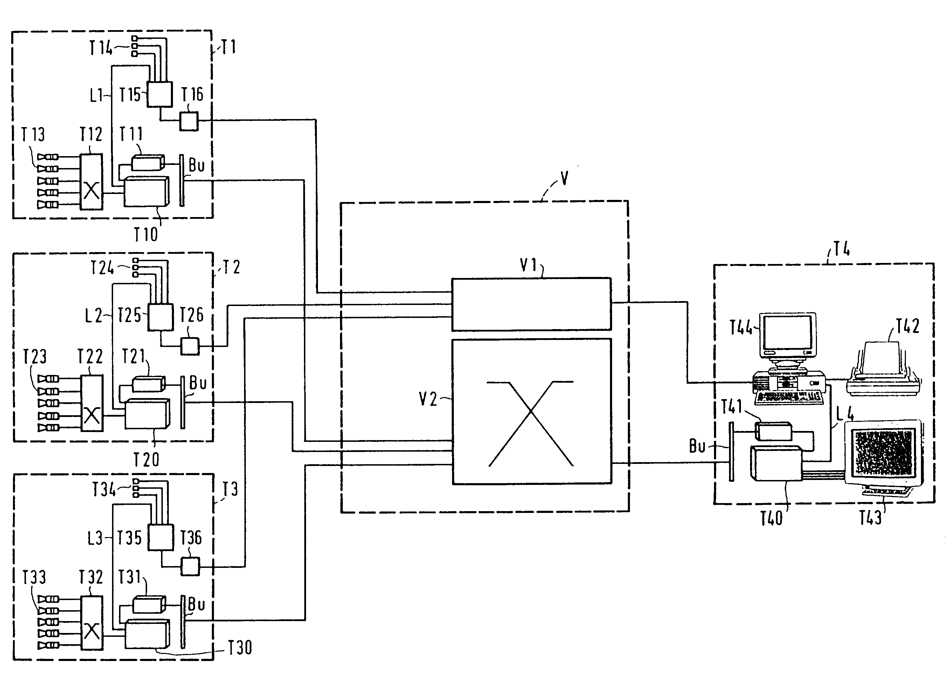

Anhand der Figur, die ein Blockschaltbild eines Ausführungsbeispiels der Erfindung darstellt, soll die Erfindung nun näher erläutert werden.

Die Figur zeigt drei Teilnehmer T1, T2 und T3, die identisch ausgerüstet sind und die über eine Ortsvermittlung V mit einem vierten Teilnehmer T4 verbunden werden können. Die Verbindung der drei Teilnehmer T1, T2 und T3 mit dem Teilnehmer T4 erfolgt über zwei DBP-Telekom-Netze, nämlich das TEMEX-Netz und das ISDN-Netz.

TEMEX ist ein Dienst der Deutschen Bundespost TELEKOM für die Übermittlung von Fernwirkinformationen. Es wird unter anderem für die Meldung von Alarmzuständen benutzt. Deswegen sind bei den Teilnehmern T1, T2 und T3 Sensoren T14, T24 und T34 vorgesehen, deren Daten über TEMEX-Adapter T15, T25 und T35 weitergegeben werden. Auf jeden Adapter folgt ein TEMEX-Netzanschlußgerät T16, T26 und T36, das über eine Standleitung mit einem TEMEX-Rechner V1 in der öffentlichen Vermittlung verbunden ist. Die Standleitung wechselt nur dann ihren Zustand, wenn der zugehörige TEMEX-Adapter eine Alarmmeldung abzugeben hat. Über einen Rückkanal vom TEMEX-Rechner V1 zu einem der Adapter T15, T25 oder T35 können vom TEMEX-Rechner V1 einfache Befehle T25 oder T35 können vom TEMEX-Rechner V1 einfache Befehle übertragen werden , die durch eine binäre Variable codiert werden. Als Beispiel sei hier das Ein- oder Ausschalten einer Heizung genannt.

Der TEMEX-Rechner V1 faßt die Daten der Standleitungen zu einem Multiplexsignal zusammen und gibt dieses an den vierten Teilnehmer T4, eine Überwachungszentrale, weiter. Die Überwachungszentrale kann durch eine Rückleitung zum TEMEX-Rechner V1 binär kodierte Befehle für bestimmte Teilnehmer Tl, T2 oder T3 erteilen. Die Meldungen und Befehle werden durch einen Rechner T44 der Überwachungsanlage T4 verarbeitet und gegebenenfalls auf einem Drucker T42 protokolliert.

Über die Leitungen des ISDN-Netzes sind Videocodecs T10, T20 und T30 als Datengeräte über eine Wählvermittlungsanlage V2 mit einem Videocodec T40 verbindbar. Bevor die Daten z.B. auf Busleitungen Bu (So-Anschluß) gegeben werden, werden sie durch eine Anpassungsschaltung mit Rufnummernspeicher T11, T21, T31 und T41 an das ISDN-Netz angepaßt. Auch die Daten, die zum Verbindungsaufbau erforderlich sind und bei Verbindungswunsch an die Vermittlungsstelle V2 übertragen werden müssen, laufen über die Anpassungsschaltung.

Die Teilnehmer T1,T2 und T3 sind mit jeweils fünf Videokameras T13, T23 und T33 zur Bewachung von Objekten ausgerüstet. Die Kameras sind über ein Koppelnetzwerk T12, T22 oder T32 an den zugehörigen Videocodec T10, T20 oder T30 anschließbar. Über die Verbindung zwischen dem Koppelnetzwerk und dem zugehörigen Videocodec sind sowohl das Koppelnetzwerk als auch die Stellung der Kameras einstellbar.

Über eine ISDN-Rufnummer ist z.B. der Teilnehmer T1 von der Überwachungszentrale aus anwählbar, jedoch ist sein Codec T10 so programmiert, daß er in diesem Fall keine Daten abgibt.

Auch jeder andere Teilnehmer des ISDN-Netzes würde bei Anruf des Teilnehmers T1 keine Daten von ihm erhalten. Denn die Kenntnis dieser Daten könnte z.B. offenbaren, welche Objekte bewacht werden und somit einem Unbefugten nützliche Informationen liefern.

Damit die Überwachungszentrale T4 ohne Geheimnummer die Videodaten der Teilnehmer T1, T2 oder T3 überspielt bekommt, ist zwischen dem TEMEX-Netz und dem ISDN-Netz über bidirektionale Leitungen L1, L2, L3 und L4 eine Verbindung hergestellt. Über die Verbindung L1, L2 oder L3 wird bei Befehlsübermittlung durch die Zentrale T4 über das TEMEX-Netz die Anpassungsschaltung T11, T21 oder T31 veranlaßt, mit der in ihr gespeicherten Rufnummer die Zentrale T4 anzuwählen. Die Befehlsübermittlung kommt einer Anwahl des Teilnehmers T1, T2 oder T3 über das TEMEX-Netz gleich. Nach Herstellung der Verbindung zwischen einem der Teilnehmer T1, T2 oder T3 und der Zentrale T4 über das ISDN-Netz werden die Videodaten des Codecs T10, T20 oder T30 übertragen, vom Codec T40 dekodiert, auf einem Monitor T43 gegebenenfalls sichtbar gemacht oder auch vom Rechner T44 ausgewertet.

Von der Zentrale T4 aus ist es dann auch möglich, Steuersignale an die Kameras zu übertragen und z.B. deren Einstellung zu verändern; ebenso ist es möglich, Parameter der Codecs ferngesteuert zu verändern.

Selbst wenn es einem unbefugten Benutzer gelingen sollte, über das TEMEX-Netz die Videocodecs dazu zu veranlassen, sicherheitsempfindliche Daten auszusenden, werden diese wegen der eingespeicherten Rufnummer in der Anpassungsschaltung an die Überwachungszentrale T4 übertragen.

## Patentansprüche

1. System zur Kontrolle des Zugriffs auf die Daten eines Datengerätes (T10,T20,T30), das zum Anschluß an ein öffentliches Netz (V2) und zum Austausch von Daten über dieses Netz mit einem zweiten Teilnehmer (T4) vorgesehen ist,
gekennzeichnet durch folgende Merkmale:
a) dem Datengerät (T10,T20,T30) ist eine Anpassungsschaltung (T15,T25,T35) zugeordnet, die über ein gesichertes Netz (V1) anwählbar ist,
b) die Anpassungsschaltung (T15,T25,T35) ist derart ausgelegt, daß sie bei ihrer Anwahl über das gesicherte Netz (V1) das Datengerät (T10,T20,T30) veranlaßt, den zweiten Teilnehmer (T4) über das öffentliche Netz (V2) anzuwählen.

2. System nach Anspruch 1,
dadurch gekennzeichnet,
daß die Rufnummer des zweiten Teilnehmers (T4) in einem dem Datengerät zugeordneten Speicher (T11,T21,T31) gespeichert ist.

3. System nach einem der Ansprüche 1 oder 2,
dadurch gekennzeichnet,
daß es sich bei dem Datengerät um einen Bildkodierer handelt es sich.

4. System nach einem der Ansprüche 1 bis 3,
dadurch gekennzeichnet,
daß es sich bei dem öffentlichen Netz um das ISDN-Netz handelt.

5. System nach einem der Ansprüche 1 bis 4,
dadurch gekennzeichnet,
daß es sich bei dem gesicherten Netz um das TEMEX-Netz handelt.

6. System nach einem der Ansprüche 1 bis 5,
dadurch gekennzeichnet,
daß der zweite Teilnehmer (T4) in einer Überwachungszentrale untergebracht ist.

7. Anpassungsschaltung (T15, T25, T35) zur Kontrolle des Zugriffs auf die Daten eines Datengerätes (T10,T20,T30), das zum Anschluß an ein öffentliches Netz (V2) und zum Austausch von Daten über dieses Netz mit einem zweiten Teilnehmer (T4) vorgesehen ist, wobei die Anpassungsschaltung (T15, T25, T35) über ein gesichertes Netz (V1) anwählbar ist und bei ihrer Anwahl über das gesicherte Netz (V1) dafür vorgesehen ist, das Datengerät (T10,T20,T30) zu veranlassen, den zweiten Teilnehmer (T4) über das öffentliche Netz (V2) anzuwählen.

## Claims

1. System for checking the access to the data of a data device (T10, T20, T30) which is provided for connection to a public network (V2) and for exchanging data with a second subscriber (T4) via this network, characterized by the following features:
a) the data device (T10, T20, T30) is associated with an adapter circuit (T15, T25, T35) which can be selected via a protected network (V1),
b) the adapter circuit (T15, T25, T35) is designed in such a manner that, when it is selected via the protected network (V1), it causes the data device (T10, T20, T30) to select the second subscriber (T4) via the public network (V2).

2. System according to Claim 1, characterized in that the call number of the second subscriber (T4) is stored in a memory (T11, T21, T31) associated with the data device.

3. System according to one of Claims 1 or 2, characterized in that the data device can be an image coder.

4. System according to one of Claims 1 to 3, characterized in that the public network is the ISDN network.

5. System according to one of Claims 1 to 4, characterized in that the protected network is the TEMEX network.

6. System according to one of Claims 1 to 5, characterized in that the second subscriber (T4) is accommodated in a monitoring centre.

7. Adapter circuit (T15, T25, T35) for checking the access to the data of a data device (T10, T20, T30) which is provided for connection to a public network (V2) and for exchanging data with a second subscriber (T4) via this network, the adapter circuit (T15, T25, T35) being selectable via a protected network (V1) and, when it is selected via the protected network (V1), being provided for causing the data device (T10, T20, T30) to select the second subscriber (T4) via the public network (V2).

## Revendications

1. Système de contrôle d'accès aux données d'un appareil de données (T10, T20, T30), qui est prévu pour le raccordement à un réseau public (V2) et pour l'échange de données par l'intermédiaire de ce réseau avec un second partenaire (T4), caractérisé en ce que :
a) à l'appareil de données (T10, T20, T30), est associé un circuit d'adaptation (T15, T25, T35), qui peut être sélectionné par l'intermédiaire d'un réseau protégé (V1),
b) le circuit d'adaptation (T15, T25, T35) est réalisé de telle sorte qu'il permet, lors de son choix par l'intermédiaire du réseau protégé (V1), à l'appareil de données (T10, T20, T30) de sélectionner le second partenaire (T4) par l'intermédiaire du réseau public (V2).

2. Système selon la revendication 1, caractérisé en ce que le numéro d'appel du second partenaire (T4) est mémorisé dans une mémoire (T11, T21, T31) associée à l'appareil de données.

3. Système selon l'une des revendications 1 ou 2, caractérisé en ce qu'il s'agit, dans le cas de l'appareil de données, d'un codeur d'image.

4. Système selon l'une quelconque des revendications 1 à 3, caractérisé en ce qu'il s'agit, dans le cas du réseau public, d'un réseau RNIS.

5. Système selon l'une quelconques des revendications 1 à 4, caractérisé en ce qu'il s'agit, dans le cas du réseau protégé, du réseau TEMEX.

6. Système selon l'une quelconque des revendications 1 à 5, caractérisé en ce que le second partenaire (T4) est disposé dans une centrale de surveillance.

7. Circuit d'adaptation (T15, T25, T35) de contrôle d'accès aux données d'un appareil de données (T10, T20, T30), qui est prévu pour le raccordement à un réseau public (V2) et pour l'échange de données par l'intermédiaire de ce réseau avec un second partenaire (T4), le circuit d'adaptation (T15, T25, T35) pouvant être sélectionné par l'intermédiaire d'un réseau protégé (V1) et est prévu lors de sa sélection par l'intermédiaire du réseau protégé (V1) afin que l'appareil de données (T10, T209, T30) permette de sélectionner le second partenaire (T4) par l'intermédiaire du réseau public (V2).
